# DEMANDE DE BREVET EUROPEEN

(11) **EP 0 949 439 A1**
(43) Date de publication de la demande: **13.10.1999**
(21) Numéro de dépôt: 99870064.5
(22) Date de dépôt: 01.04.1999
(51) Int. Cl.: F16L 9/133

(54) **Dispositif pour le transport ou le stockage de liquide alimentaire et sa fabrication**

(30) Priorité: 01.04.1998 FR 9804024
(71) Demandeur: Société ETEX de recherches Techniques, 78540 Vernouillet (FR)
(72) Inventeur: Pollet, Jean-Claude, 78740 Vaux-sur-Seine (FR)
(74) Mandataire: De Vleeschauwer, Natalie

(57) **Abrégé**

Dispositif pour le transport ou le stockage de liquide ou de suspension à usage alimentaire, ledit dispositif présentant une face intérieure destinée à être en contact avec le liquide ou la suspension, ledit dispositif comportant au moins une couche en résine thermodurcissable sensiblement non chargée de fibre formant la couche en résine thermodurcissable radialement la plus à l'intérieur et présentant une face tournée vers l'intérieur du dispositif, caractérisé en ce que la couche en résine thermodurcissable radialement la plus à l'intérieur est munie sur sa face tournée vers l'intérieur d'au moins une couche à base d'un copolymère de PVDC, l'épaisseur de ladite couche étant comprise entre 1 et 15 µm.

## Description

La présente invention a pour objet un dispositif tel un tube, un raccord tubulaire ou un réservoir pour le transport ou le stockage de liquide ou de suspension à usage alimentaire, en particulier pour le transport d'eau potable.

Les tubes pour le transport de liquide alimentaire peuvent être réalisés en des matières diverses, telles que PVC, polyéthylène, ou en résine thermodurcissable, telle que polyester insaturé, vinylester, epoxide, ...

Les tubes réalisés en résine thermodurcissable qui sont couramment utilisés pour cet usage présentent une face intérieure destinée à être en contact avec le liquide à transporter et une face extérieure, ledit tube comportant au moins une première couche en résine thermodurcissable chargée de fibres, ladite première couche étant tournée vers la face extérieure, et une deuxième couche en résine thermodurcissable sensiblement non chargée de fibres, ladite deuxième couche, reliée à ladite première couche, étant tournée vers la face intérieure du tube. Ainsi, dans les tubes en résine thermodurcissable actuels, la deuxième couche en résine thermodurcissable vient en contact avec l'eau potable à transporter.

De tels tubes réalisés en résine thermodurcissable sont grevés de problèmes qui leur sont propres, à savoir une polymérisation incomplète, problème de stabilité, etc.

Jusqu'à présent, grâce à des conditions de fabrication précises (degré de polymérisation, adhérence des couches entre elles, conditions pour limiter les problèmes d'oxydation), de tels tubes répondent à toutes les normes de sécurité et d'hygiène requises et aux critères de résistance mécanique requis, tels que résistance à l'écrasement.

Toutefois, pour l'avenir, l'utilisation de ce type de tuyaux ou tubes pose de nombreux problèmes, car les normes d'hygiène et de sécurité en cette matière deviennent de plus en plus sévères notamment en France. Ces normes d'hygiène et de sécurité plus sévères ont pour objet de ne permettre pour le transport ou le stockage d'eau potable que des équipements non susceptibles d'altérer la qualité des eaux distribuées, non susceptibles de se dégrader ou de communiquer à l'eau potable des saveurs ou odeurs souvent désagréables.

Un test extrêmement sévère des tubes pour le transport d'eau potable consiste à soumettre les tubes à une eau fortement chlorée (teneur de 100 ppm) et à déterminer si les tubes ainsi traités modifient la qualité et en particulier les propriétés organoleptiques des eaux à transporter.

D'autre part, il a été constaté que le contact prolongé avec une eau fortement chlorée réduit la résistance mécanique des tubes en résine thermodurcissable et en particulier de ceux en polyester insaturé.

On a cherché des solutions pour répondre à ces problèmes. C'est-à-dire qu'on a cherché à réaliser un tube en résine thermodurcissable dont la résistance mécanique n'est en substance pas altérée par un contact prolongé avec de l'eau chlorée et qui, par ailleurs, n'altère pas la qualité organoleptique de l'eau transportée.

Pour résoudre ces problèmes, l'homme du métier dans le domaine des tubes réalisés en résine thermodurcissable pourrait envisager les solutions suivantes :
1. utilisation pour la couche interne du tube, d'une résine thermodurcissable de plus grande stabilité,
2. une étape de polymérisation supplémentaire,
3. appliquer la couche de résine thermodurcissable formant la couche interne du tube sous atmosphère d'azote pour éviter avec certaines résines des réactions d'oxydation,
4. modifier les réactifs utilisés pour former la couche de résine thermodurcissable.

Toutes ces solutions se sont révélées soit inapplicables sur un plan industriel, soit incapables de répondre aux problèmes concernant la qualité (et notamment la qualité organoleptique) de l'eau transportée par ces tubes.

Le demandeur a maintenant trouvé qu'il était possible de répondre aux problèmes d'odeur et de saveur, tout en évitant des dégradations de la couche interne en résine thermodurcissable, en appliquant sur la surface interne du tube en résine thermodurcissable une ou plusieurs couches minces de certains copolymères particuliers, à savoir des copolymères de PVDC (copolymère à base de chlorure de vinylidène). Ce copolymère est de préférence appliqué sous la forme d'une dispersion aqueuse, mais peut éventuellement aussi être appliqué sous la forme d'une solution dans un solvant approprié.

Le demandeur a remarqué que pour que la couche en copolymère de PVDC adhère fermement sur la résine thermodurcissable et ceci même après une succession d'écrasements mécaniques, l'épaisseur de la couche ou de chacune des couches superposées doit être comprise entre 1 et 15 µm, de préférence entre 2 et 10 µm. Le demandeur a remarqué en outre que la présence d'au moins une couche d'épaisseur comprise entre 1 et 15 µm, de préférence entre 2 et 10 µm permet d'assurer une meilleure conservation des propriétés mécaniques du tube, en particulier lorsqu'il est mis en contact avec des eaux acides ou des eaux contenant des teneurs importantes de chlore.

La présente invention a donc pour objet un dispositif, tel un tube, un raccord de tube ou un réservoir, pour le transport ou l'entreposage de liquide ou de suspension à usage alimentaire, en particulier d'eau potable, ledit dispositif présentant une face intérieure destinée à être en contact avec le liquide ou suspension à transporter ou entreposer et une face extérieure. Le dispositif comporte au moins une couche en résine thermodurcissable chargée de fibres et au moins une couche en résine thermodurcissable sensiblement non chargée de fibres formant la couche en résine thermodurcissable radialement la plus à l'intérieur et présentant une surface tournée vers l'intérieur du dispositif, ledit dispositif se caractérisant en ce que la couche en résine thermodurcissable radialement la plus à l'intérieur est munie sur sa surface tournée vers l'intérieur du dispositif d'au moins une couche d'au moins un copolymère à base de PVDC, l'épaisseur de ladite couche étant comprise entre 1 et 15 µm, de préférence entre 2 et 10 µm.

On a maintenant observé qu'une telle couche, malgré sa faible épaisseur, permet d'une part, de protéger la couche de résine thermodurcissable sensiblement non chargée de fibres contre l'attaque du chlore présent dans le liquide ou la suspension et, d'autre part, d'éviter la migration de contaminants, organoleptiques ou non, de la résine thermodurcissable vers le liquide ou la suspension.

De façon avantageuse, le copolymère à base de PVDC présente un poids moléculaire compris entre 80.000 et 200.000.

De façon avantageuse, le copolymère est un copolymère séquencé comportant des séquences PVDC et des séquences polyacrylate de méthyle et/ou polyméthacrylate de méthyle.

De préférence, la couche à base de copolymère contient au moins une cire telle qu'une cire de polyéthylène à raison de 0,1 à 2% en poids.

Selon une forme de réalisation, le copolymère présente un indice de cristallinité supérieur à 1,2.

La ou les couches en résine thermodurcissable chargée de fibres sont typiquement des couches riches en fibres, c'est-à-dire de couches contenant entre 20 et 40% en poids de fibres (par rapport à la composition complète). Ces fibres peuvent être présentes sous la forme d'une nappe non tissée, par exemple de fibres thermoplastiques, de fibres de verre ou d'une combinaison de fibres thermoplastiques avec des fibres de verre.

La ou les couches en résine thermodurcissable sensiblement non chargée de fibres sont typiquement des couches riches en résine, c'est-à-dire, des couches contenant au moins 90% en poids de résine et pas plus de 5% en poids de fibres. La couche en résine thermodurcissable sensiblement non chargée de fibres radialement la plus à l'intérieur est de préférence une couche en résine thermodurcissable sensiblement sans fibres ou matières de charge.

Le nombre de couches formant le dispositif suivant l'invention varie selon l'application envisagée. Un tube pour le transport d'eau potable peut, par exemple, être constitué de la succession des couches suivantes (allant de la face extérieure vers la face intérieure) :
1) une première couche en résine thermodurcissable chargée de sable,
2) une couche en résine thermodurcissable fortement armée de fibres comportant, par exemple, 40% en poids de fibres et 60% en poids de résine, ou encore de 30% en poids de fibres et de 70% en poids de résine,
3) une couche en résine thermodurcissable chargée de sable et de carbonate de calcium,
4) une couche en résine thermodurcissable riche en fibres (p. ex. 30% en poids de fibre),
5) une couche en résine thermodurcissable contenant un maximum de 5% en poids de fibres, de préférence une couche en résine thermodurcissable sensiblement sans fibres ou matière de charge, cette couche étant la couche radialement la plus à l'intérieur.

Les couches 1 à 4 forment une structure sandwich. D'autres structures sandwich peuvent être utilisées.

L'invention a également pour objet un procédé de fabrication d'un dispositif (tube, raccord de tube ou réservoir) suivant l'invention. Dans ce procédé, on forme un tel dispositif présentant une face intérieure destinée à être en contact avec le liquide ou la suspension à transporter ou stocker et une face extérieure, ledit tube ou réservoir comportant au moins une couche en résine thermodurcissable chargée de fibres et au moins une couche en résine thermodurcissable sensiblement non chargée de fibres formant la couche en résine thermodurcissable radialement la plus à l'intérieur et présentant une surface tournée vers l'intérieur du tube ou réservoir.
On traite ensuite la face tournée vers l'intérieur de la couche en résine thermodurcissable radialement la plus à l'intérieur, après que cette dernière couche ait atteint son état de gel, au moyen d'une solution d'au moins un copolymère à base de PVDC dans un solvant (copolymère de PVDC dissous dans un solvant approprié ou dans un mélange de solvants appropriés, tels que tétrahydrofuranne (THF)) et/ou d'une dispersion aqueuse anionique acide d'au moins un copolymère à base de PVDC, pour déposer, de manière sensiblement uniforme, sur cette surface, une quantité de copolymère à base de PVDC comprise entre 1,5 et 22,5 g/m², de préférence entre 3 et 15 g/m² , de manière à obtenir après élimination de solvant et/ou d'eau, un revêtement de copolymère de PVDC d'une épaisseur comprise entre 1 et 15 µm, de préférence entre 2 et 10 µm. De préférence, on utilise dans le procédé suivant l'invention une dispersion aqueuse anionique acide de PVDC.

De façon avantageuse, on soumet ladite surface tournée vers l'intérieur de la couche en résine thermodurcissable radialement la plus à l'intérieur, à une succession d'étapes de traitement au moyen d'une telle ou de telles solutions ou dispersion(s) et d'élimination d'eau ou solvant pour obtenir une superposition de couches de copolymère présentant chacune une épaisseur comprise entre 1 et 15 µm, de préférence entre 2 et 10 µm. Par exemple, on dépose ainsi sur la deuxième couche en résine thermodurcissable de 1 à 6 couches, en particulier de 2 à 4 couches de copolymère à base de PVDC.

Il s'est avéré avantageux d'assurer une température de la face tournée vers l'intérieur de la couche en résine thermodurcissable radialement la plus à l'intérieur, supérieure à 50°C, en particulier supérieure à 80°C, lors du traitement de ladite face au moyen d'une dispersion aqueuse anionique acide d'au moins un copolymère à base de PVDC. Par exemple, juste avant la fin de la réaction de polymérisation de la résine thermodurcissable de la couche (après gélification de la couche de résine) ou sensiblement juste après la fin de la réaction de polymérisation (c'est-à-dire sensiblement après le durcissement de la couche, mais lorsque la couche est encore chaude par la chaleur dégagée par la réaction exothermique de polymérisation), on traite la surface tournée vers l'intérieur de la couche au moyen de ladite dispersion anionique aqueuse de copolymère à base de PVDC. Ce traitement est avantageusement réalisé par pulvérisation ou nébulisation de la dispersion sur la surface tournée vers l'intérieur de la couche de résine thermodurcissable. Ladite pulvérisation ou nébulisation est avantageusement réalisée sur la face intérieure de la couche en résine thermodurcissable d'un tube ou réservoir lorsque ce dernier est mis en rotation par rapport à un axe, en particulier un axe de symétrie du tube ou réservoir. Avantageusement, on pulvérise la dispersion sur la face intérieure du tube ou réservoir mis en rotation autour de son axe avec une vitesse de rotation supérieure à 50 tours par minute. La mise en rotation du tube ou réservoir est avantageuse car les gouttelettes pulvérisées s'écrasent sur la paroi du tube ou réservoir et sont soumises à une force centrifuge, de sorte que les gouttelettes de copolymère de PVDC sont fermement appliquées contre la couche en résine thermodurcissable radialement la plus à l'intérieur.

Ainsi, le traitement de la surface tournée vers l'intérieur peut être intégré dans un procédé de fabrication (par pulvérisation et centrifugation) d'objets à parois cylindriques, tels que tubes, réservoirs.

Pour le traitement, on ajuste avantageusement entre 15 et 50% en poids la teneur en copolymère à base de PVDC dans la dispersion de traitement de la couche radialement la plus à l'intérieur. Une telle teneur s'est avérée appropriée pour assurer la formation d'une couche continue et uniforme de copolymère de PVDC de faible épaisseur.

Selon une forme de réalisation avantageuse, on traite la surface tournée vers l'intérieur de la couche radialement la plus à l'intérieur, au moyen d'une dispersion ayant une température supérieure à 30°C, en particulier supérieure à 60°C. L'utilisation d'une dispersion chaude de PVDC a permis une pulvérisation plus aisée de la dispersion et un dépôt encore plus régulier de la dispersion sur la deuxième couche. Il est clair que la température de la dispersion est avantageusement inférieure à environ 100°C pour éviter une cristallisation ou une dégradation du PVDC au niveau de la tête de pulvérisation.
Après le dépôt d'une ou de plusieurs couches à base de PVDC sur la deuxième couche en résine thermodurcissable, on élimine avantageusement l'eau par séchage à une température comprise entre 80 et 120°C.

Il s'est avéré intéressant d'ajuster le pH de la dispersion de traitement de la deuxième couche à une valeur comprise entre 4 et 5,5.

Selon une forme avantageuse du procédé suivant l'invention, on utilise une dispersion aqueuse à base d'au moins un copolymère à base de PVDC présentant un poids moléculaire compris entre 80.000 et 200.000. Avantageusement, le copolymère est un copolymère séquencé comportant des séquences PVDC et des séquences polyacrylate de méthyle et/ou polyméthacrylate de méthyle. De préférence, le copolymère présente un indice de cristallinité supérieur à 1,2.
Il s'est avéré utile que la dispersion aqueuse à base de copolymère contienne au moins une cire à raison de 0,1 à 2% en poids par rapport au poids de copolymère.

L'invention a encore pour objet un procédé de transport d'eau potable au moyen de tubes suivant l'invention raccordés directement entre eux ou au moyen de raccords. Ledit procédé assure une bonne qualité de l'eau transportée, ladite eau transportée répondant en outre aux critères de saveurs et d'odeurs. L'état de surface interne des tubes permet d'obtenir un écoulement aisé de l'eau et une diminution de turbulences et de frottements au voisinage de la surface interne du tube.

Des particularités et détails de l'invention ressortiront de la description détaillée suivante d'exemples non limitatifs de réalisation de tubes pour le transport d'eau potable.

### EXEMPLE 1

Dans un moule présentant un creux cylindrique de 600 mm de diamètre, ledit moule étant monté sur un système pour assurer la rotation du moule autour de l'axe central du creux cylindrique, on a pulvérisé du polyester insaturé et des fibres de verre discontinues pour former sur la paroi cylindrique interne du moule une couche de polyester insaturé chargée de fibres de verre d'une épaisseur totale suffisante pour obtenir les caractéristiques mécaniques désirées (suivant une première variante de réalisation l'épaisseur était d'environ 5 mm, tandis que, suivant une autre variante, ladite épaisseur était d'environ 45 mm). Dès que la transformation en gel de ladite couche a été atteinte, on a pulvérisé, sur la couche chargée de fibres de verre, du polyester insaturé pour former une couche de polyester non chargée de fibres de verre.
Dès la transformation en gel de la couche de polyester non chargée de fibres, on a pulvérisé sur cette couche (présentant une température d'environ 70°C), mise en rotation grâce à la rotation du moule, une dispersion aqueuse anionique d'un copolymère séquencé PVDC-polyacrylate de méthyle. La dispersion ainsi appliquée avait les caractéristiques suivantes : température 25°C; teneur en copolymère 40% en poids; pH de la dispersion 4,5; teneur en cire de polyéthylène 1%; indice de cristallinité 1,2; poids moléculaire d'environ 100.000 à 120.000. Le copolymère appliqué correspond au copolymère vendu par Solvay sous la dénomination PVDC IXAN®. La quantité de dispersion pulvérisée sur la couche en polyester insaturé était d'environ 15 g par m², de manière à déposer sur la couche de polyester 5 à 6 g de copolymère par m². Après avoir enlevé le tube du moule, on a séché le tube au moyen d'air chaud (température de 85-90°C). On a ainsi obtenu un tube présentant sur sa face interne un revêtement continu et uniforme en copolymère de PVDC-polyacrylate de méthyle d'une épaisseur de 5 µm environ.

Le tube ainsi obtenu présentait après durcissement des caractéristiques mécaniques similaires à celles du tube dont la face interne n'était pas munie d'une couche de PVDC. Le tube muni de la couche PVDC en contact avec un milieu aqueux riche en chlore (par exemple contenant 100 à 500 ppm) présente toutefois des caractéristiques mécaniques plus constantes dans le temps que celles du tube non muni de PVDC en contact avec un milieu aqueux riche en chlore. Lors de l'écrasement du tube muni de la couche en PVDC après la mise en contact du tube avec un milieu riche en chlore (100 ppm) présentant une température de 80°C pendant 1000 heures, aucun décollement de la couche de PVDC n'était visible. Le revêtement de copolymère de PVDC suit donc parfaitement les déformations du polyester insaturé.

Des échantillons du tube ainsi fabriqué ont été testés pour déterminer si ces derniers avaient une influence sur l'odeur et le goût de l'eau transportée. Le test a consisté en la mise en contact pendant 24 heures de la surface avec revêtement PVDC-polyacrylate avec de l'eau contenant 100mg/l de chlore. Ensuite l'eau riche en chlore utilisée lors de la mise en contact de la surface avec revêtement PVDC a été neutralisée au moyen d'hyposulfite de sodium. La surface a ensuite été rincée trois fois au moyen d'eau déminéralisée. La surface a ensuite été mise en contact avec une eau contenant 1mg/l de Chlore pendant 24 heures. Le goût et l'odeur de l'eau ont ensuite été déterminés par un groupe de trois experts goûteurs. Ce test a été répété après une mise en contact des échantillons avec l'air pendant 48 heures.

L'odeur et le goût de l'eau mise en contact des échantillons ont été testés par les experts et ont été considérés par ces experts goûteurs comme conformes à la nouvelle norme française. En d'autres termes, les experts goûteurs n'ont sensiblement pas détecté de modifications d'odeur et de goût de l'eau mise en contact avec les échantillons. Le tube muni dudit revêtement permet donc d'éviter la migration de composés du polyester vers l'eau et la migration de composés de l'eau (par exemple du chlore) vers le polyester insaturé.
Les tests décrits ci-avant sont décrits de façon plus détaillée dans la circulaire française DGS/VS4/N°94/9 du 25.01.94.

Lors de tests analogues effectués avec des échantillons de tube sans revêtement PVDC-polyacrylate, le goût de l'eau avait été modifiée de façon importante.

### EXEMPLE 2

On a répété l'exemple 1, si ce n'est qu'on a déposé sur la couche en polyester insaturé non chargée de fibres deux couches de copolymère PVDC-polyacrylate, chacune desdites couches ayant une épaisseur d'environ 5µm.

L'odeur et le goût de l'eau mise en contact d'échantillons du tube avec de l'eau ont été testés par les experts goûteurs et ont été considérés par ces experts goûteurs comme conformes à la nouvelle norme française. En d'autres termes, les experts n'ont sensiblement pas détecté de modifications d'odeur et de goût de l'eau mise en contact avec les échantillons.

### EXEMPLE 3

On a répété l'exemple 2, si ce n'est qu'on a déposé sur la couche en polyester non chargée de fibres, deux couches PVDC-polyacrylate de 3 µm d'épaisseur chacune.

L'odeur et le goût de l'eau mise en contact d'échantillons du tube avec de l'eau ont été testés par les experts goûteurs et ont été considérés par ces experts goûteurs comme conformes à la nouvelle norme française. En d'autres termes, les experts goûteurs n'ont sensiblement pas détecté de modifications de d'odeur et de goût de l'eau mise en contact avec les échantillons.

### EXEMPLE 4

On a répété l'exemple 1, si ce n'est qu'on a utilisé une dispersion aqueuse anionique de copolymère séquencé PVDC-polyacrylate contenant 30% en poids de copolymère.

La saveur, l'odeur et le goût de l'eau mise en contact d'échantillons du tube avec de l'eau ont été testés par les experts goûteurs et ont été considérés par ces experts goûteurs comme conformes à la nouvelle norme française. En d'autres termes, les experts goûteurs n'ont sensiblement pas détecté de modifications d'odeur et de goût de l'eau mise en contact avec les échantillons.

### EXEMPLE 5

On a fabriqué un tube comprenant une couche épaisse (5mm) de polyester insaturé et de fibres de verres et une couche interne en polyester insaturé non chargé de fibres de verre (épaisseur 1,5 mm) de la manière décrite à l'exemple 1.

Le tube ainsi fabriqué a été retiré du moule et a été plongé dans un bain contenant la dispersion aqueuse anionique décrite à l'exemple 1. On a ensuite retiré le tube du bain et on a séché le tube. On a ainsi obtenu un tube muni à la fois le long de sa paroi intérieure et le long de sa paroi extérieure d'un revêtement en copolymère PVDC-polyacrylate, ledit revêtement présentant une épaisseur de l'ordre de 10 µm.

Le revêtement bien qu'adhérant correctement sur le polyester insaturé semblait présenter une adhérence moindre que celle du revêtement obtenu par pulvérisation de la dispersion.

L'odeur et le goût de l'eau mise en contact d'échantillons du tube avec de l'eau ont été testés par les experts goûteurs et ont été considérés par ces experts goûteurs comme conformes à la nouvelle norme française. En d'autres termes, les experts goûteurs n'ont sensiblement pas détecté de modifications de saveur, d'odeur et de goût de l'eau mise en contact avec les échantillons.

### EXEMPLE 6

On a fabriqué un tube en utilisant un manchon démontable et chauffé, ledit manchon étant monté sur un dispositif de mise en rotation. On a pulvérisé sur l'extérieur du manchon en rotation du polyester insaturé non chargé de fibres pour former sur ledit manchon une première couche de polyester. On a pulvérisé ensuite du polyester insaturé et des fibres de verre discontinues pour former une couche de +/- 5mm d'épaisseur.
Après durcissement du polyester, on retire le tube du manchon. Le tube ainsi obtenu avait un diamètre intérieur de 150 mm. On traite ensuite la paroi interne du tube au moyen d'une dispersion aqueuse anionique de copolymère telle que décrite à l'exemple 1. Lors de ce traitement on a mis en rotation le tube autour de son axe. La quantité de dispersion pulvérisée a été suffisante pour obtenir un revêtement continu et uniforme de copolymère de 5 µm.

L'odeur et le goût de l'eau mise en contact d'échantillons du tube avec l'eau ont été testés par les experts goûteurs et ont été considérés par ces experts goûteurs comme conformes à la nouvelle norme française. En d'autres termes, les experts n'ont sensiblement pas détecté de modifications d'odeur et de goût de l'eau mise en contact avec les échantillons.

### EXEMPLE 7

On a répété l'exemple 1, si ce n'est qu'on a pulvérisé la dispersion aqueuse anionique sur la paroi interne du tube en polyester insaturé mis en rotation à la vitesse de 100 tours par minute.

L'odeur et le goût de l'eau mise en contact d'échantillons du tube avec de l'eau ont été testés par les experts goûteurs et ont été considérés par ces experts goûteurs comme conformes à la nouvelle norme française. En d'autres termes, les experts goûteurs n'ont sensiblement pas détecté de modifications d'odeur et de goût de l'eau mise en contact avec les échantillons.

### EXEMPLE 8

On a répété l'exemple 1, si ce n'est qu'on a utilisé un moule avec un creux cylindrique présentant à ses extrémités des couvercles bombés troués en leur centre.

On a fabriqué ainsi un réservoir en polyester insaturé, la face tournée vers l'intérieur présentant un revêtement continu et uniforme en copolymère PVDC-polyacrylate de méthyle d'une épaisseur de 5 µm environ.

Sans sortir du cadre de l'invention, le traitement à base de PVDC du tube, raccord tubulaire ou réservoir peut être appliqué également sur toute surface du dispositif en contact avec l'eau ou la suspension à usage alimentaire, notamment aux extrémités du tube.

## Revendications

1. Dispositif pour le transport ou le stockage de liquide ou de suspension à usage alimentaire, en particulier d'eau potable, ledit dispositif présentant une face intérieure destinée à être en contact avec le liquide ou la suspension à transporter ou à stocker et une face extérieure, ledit dispositif comportant au moins une couche en résine thermodurcissable chargée de fibres et au moins une couche en résine thermodurcissable sensiblement non chargée de fibres formant la couche radialement la plus à l'intérieur et présentant une surface tournée vers l'intérieur du dispositif, caractérisé en ce que la couche en résine thermodurcissable radialement la plus à l'intérieur est munie sur sa surface tournée vers l'intérieur du dispositif d'au moins une couche à base d'au moins un copolymère à base de PVDC, l'épaisseur de ladite couche étant comprise entre 1 et 15 µm, de préférence entre 2 et 10 µm.

2. Dispositif suivant la revendication 1, caractérisé en ce que le copolymère à base de PVDC présente un poids moléculaire compris entre 80.000 et 200.000.

3. Dispositif suivant l'une quelconque des revendications 1 et 2, caractérisé en ce que le copolymère est un copolymère séquencé comportant des séquences PVDC et des séquences polyacrylate de méthyle et/ou polyméthacrylate de méthyle.

4. Dispositif suivant l'une quelconque des revendications 1 à 3, caractérisé en ce que la résine thermodurcissable est un polyester insaturé.

5. Procédé de fabrication d'un dispositif suivant l'une quelconque des revendications 1 à 4, dans lequel on forme un dispositif comportant au moins une couche en résine thermodurcissable chargée de fibres et au moins une couche en résine thermodurcissable sensiblement non chargée de fibres formant la couche en résine thermodurcissable radialement la plus à l'intérieur et présentant une surface tournée vers l'intérieur du dispositif, caractérisé en ce qu'on traite la surface tournée vers l'intérieur de la couche en résine thermodurcissable radialement la plus à l'intérieur, après que cette dernière couche ait atteint son état de gel, au moyen d'une dispersion aqueuse anionique acide d'au moins un copolymère à base de PVDC pour déposer, sur ladite surface une quantité de dispersion aqueuse de copolymère à base de PVDC comprise entre 1,5 et 22,5 g/m², de préférence entre 3 et 15 g/m², de manière à obtenir après élimination d'eau un revêtement de copolymère à base de PVDC d'une épaisseur comprise entre 1 et 15 µm, de préférence entre 2 et 10 µm.

6. Procédé suivant la revendication 5, caractérisé en ce qu'on soumet la surface tournée vers l'intérieur de la couche en résine thermodurcissable radialement la plus à l'intérieur, à une succession d'étapes de traitement au moyen d'une ou de dispersions dudit copolymère et d'élimination d'eau pour obtenir une superposition de couches de copolymère d'épaisseur comprise entre 2 et 10 µm.

7. Procédé suivant l'une des revendications 5 et 6, caractérisé en que pour la surface tournée vers l'intérieur de la couche en résine thermodurcissable radialement la plus à l'intérieur, on assure une température supérieure à 50°C, de préférence supérieure à 80°C lors du traitement de ladite couche au moyen d'une dispersion aqueuse anionique acide d'au moins un copolymère à base de PVDC.

8. Procédé suivant l'une quelconque des revendications 5 à 7, caractérisé en ce qu'on ajuste entre 15 et 50% en poids la teneur en copolymère à base de PVDC dans la dispersion de traitement de la deuxième couche.

9. Procédé suivant l'une quelconque des revendications 5 à 8, caractérisé en ce qu'on traite la surface tournée vers l'intérieur de la couche en résine thermodurcissable radialement la plus à l'intérieur, au moyen d'une dispersion présentant une température supérieure à 60°C.

10. Procédé suivant l'une quelconque des revendications 5 à 9, caractérisé en ce que l'élimination d'eau est effectuée par séchage à une température comprise entre 80 et 120°C.

11. Procédé suivant l'une quelconque des revendications 5 à 10, caractérisé en qu'on ajuste le pH de la dispersion de traitement de la deuxième couche à une valeur comprise entre 4 et 5,5.

12. Procédé suivant l'une quelconque des revendications 5 à 11, caractérisé en ce qu'on traite la surface tournée vers l'intérieur de la couche en résine thermodurcissable radialement la plus à l'intérieur, après durcissement de celle-ci, au moyen de la dispersion.

13. Procédé suivant l'une quelconque des revendications 5 à 12, caractérisé en ce qu'on pulvérise la dispersion sur la surface tournée vers l'intérieur de la couche en résine thermodurcissable radialement la plus à l'intérieur.

14. Procédé suivant la revendication 13, caractérisé en ce qu'on pulvérise la dispersion sur la surface tournée vers l'intérieur de la couche en résine thermodurcissable radialement la plus à l'intérieur, d'un dispositif mis en rotation autour de son axe à une vitesse supérieure à 50 tours par minute.

15. Procédé de fabrication d'un dispositif suivant l'une quelconque des revendications 1 à 4, dans lequel on forme un dispositif comportant au moins une couche en résine thermodurcissable chargée de fibres et au moins une couche en résine thermodurcissable sensiblement non chargée de fibres formant la couche en résine thermodurcissable radialement la plus à l'intérieur et présentant une surface tournée vers l'intérieur du dispositif, caractérisé en ce qu'on traite la surface tournée vers l'intérieur de la couche en résine thermodurcissable radialement la plus à l'intérieur, après que cette dernière couche ait atteint son état de gel, au moyen d'une solution d'au moins un copolymère à base de PVDC dans un solvant, pour déposer, sur ladite surface tournée vers l'intérieur de la couche en résine thermodurcissable radialement le plus à l'intérieur, une quantité de solution de copolymère à base de PVDC comprise entre 1,5 et 22,5 g/m², de préférence entre 3 et 15 g/m², de manière à obtenir après élimination de solvant un revêtement de copolymère à base de PVDC d'une épaisseur comprise entre 1 et 15 µm, de préférence entre 2 et 10 µm.

16. Procédé suivant la revendication 15, caractérisé en ce qu'on soumet la surface tournée vers l'intérieur de la couche en résine thermodurcissable radialement la plus à l'intérieur, à une succession d'étapes de traitement au moyen d'une ou de solutions dudit copolymère et d'élimination du solvant pour obtenir une superposition de couches de copolymère d'épaisseur comprise entre 2 et 10 µm.

17. Procédé suivant l'une quelconque des revendications 5 à 16, caractérisé en ce qu'on utilise une dispersion aqueuse à base d'au moins un copolymère à base de PVDC présentant un poids moléculaire compris entre 80.000 et 200.000.

18. Procédé suivant l'une quelconque des revendications 5 à 17, caractérisé en ce que le copolymère est un copolymère séquencé comportant des séquences PVDC et des séquences polyacrylate de méthyle et/ou polyméthacrylate de méthyle.

19. Procédé suivant l'une des revendications 5 à 18, caractérisé en ce que la résine thermodurcissable est un polyester insaturé.
